# EUROPEAN PATENT APPLICATION

(11) **EP 4 456 167 A1**
(43) Date of publication of application: **30.10.2024**
(21) Application number: 22911115.8
(22) Date of filing: 16.12.2022
(51) Int. Cl.: H01M 4/13, H01M 4/525, H01M 4/62

(54) **NON-AQUEOUS ELECTROLYTE SECONDARY BATTERY**

(30) Priority: 20.12.2021 JP 2021206170
(71) Applicant: Panasonic Energy Co., Ltd., Osaka 570-8511 (JP)
(72) Inventor: ISHIKAWA, Takayuki, Kadoma-shi, Osaka 571-0057 (JP); NOMURA, Shun, Kadoma-shi, Osaka 571-0057 (JP)
(74) Representative: Novagraaf International SA
(86) International application number: PCT/JP2022/046383
(87) International publication number: WO 2023/120411

(57) **Abstract**

This non-aqueous electrolyte secondary battery is characterized by having a positive electrode, a negative electrode, and a non-aqueous electrolyte, wherein the positive electrode has a positive electrode current collector and a positive electrode mixture layer provided on the positive electrode current collector, the positive electrode mixture layer includes a positive electrode active material and a dielectric, and the ratio (D50 of the dielectric/D50 of the positive electrode active material) of a volume-based median diameter (D50) of the dielectric to a volume-based median diameter (D50) of the positive electrode active material is 0.15-0.6.

## Description

### TECHNICAL FIELD

The present disclosure relates to a non-aqueous electrolyte secondary battery.

### BACKGROUND

In recent years, as a secondary battery having high output and high energy density, a non-aqueous electrolyte secondary battery that includes a positive electrode, a negative electrode, and a non-aqueous electrolyte and performs charging and discharging by moving lithium ions and the like between the positive electrode and the negative electrode has been widely used.

For example, Patent Literature 1 discloses a non-aqueous electrolyte secondary battery including a positive electrode material in which barium titanate as a dielectric is present on a surface of a positive electrode active material. In the non-aqueous electrolyte secondary battery disclosed in Patent Literature 1, it is described that interface resistance is reduced by the presence of barium titanate on the surface of the positive electrode active material.

### CITATION LIST

### PATENT LITERATURE

Patent Literature 1: JP 2014-116129 A

### SUMMARY

When the dielectric and the positive electrode active material are mixed in manufacturing the positive electrode, the dielectrics may be aggregated and not uniformly dispersed. Since the dielectric itself has an insulating property, for example, in a battery including a positive electrode in which dielectrics are unevenly distributed, charge transfer resistance may increase.

An object of the present disclosure is to provide a non-aqueous electrolyte secondary battery having low charge transfer resistance.

A non-aqueous electrolyte secondary battery according to an aspect of the present disclosure includes a positive electrode, a negative electrode, and a non-aqueous electrolyte, in which the positive electrode includes a positive electrode current collector and a positive electrode mixture layer provided on the positive electrode current collector, the positive electrode mixture layer includes a positive electrode active material and a dielectric, and a ratio (D50 of the dielectric/D50 of the positive electrode active material) of a volume-based median diameter (D50) of the dielectric to a volume-based median diameter (D50) of the positive electrode active material is greater than or equal to 0.15 and less than or equal to 0.6.

According to an aspect of the present disclosure, it is possible to provide a non-aqueous electrolyte secondary battery having low charge transfer resistance.

### BRIEF DESCRIPTION OF DRAWINGS

FIG. 1 is a cross-sectional view of a non-aqueous electrolyte secondary battery as an example of an embodiment.
FIG. 2 is a view showing a relative value of charge transfer resistance of each of batteries of Examples and other Comparative Examples when the charge transfer resistance of the battery of Comparative Example 1 is 1.

### DESCRIPTION OF EMBODIMENTS

Hereinafter, examples of embodiments will be described in detail. The drawings referred to in the description of the embodiment are schematically illustrated, and dimensional ratios and the like of components drawn in the drawings may be different from actual ones.

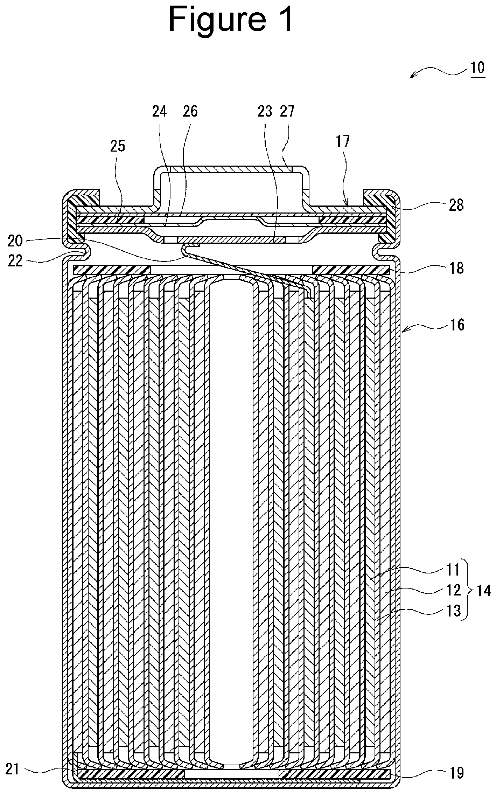

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by wounding a positive electrode 11 and a negative electrode 12 with a separator 13 interposed between the positive electrode 11 and the negative electrode 12, a non-aqueous electrolyte, insulating plates 18 and 19 that are disposed on upper and lower sides of the electrode assembly 14, respectively, and a battery case housing the members and including a case body 16 and a sealing assembly 17. Note that, instead of the wound electrode assembly 14, another form of an electrode assembly such as a stacked electrode assembly in which a positive electrode and a negative electrode are alternately stacked with a separator interposed therebetween may be applied. In addition, examples of the battery case include a metal case having a cylindrical shape, a square shape, a coin shape, a button shape, or the like, and a resin case formed by laminating resin sheets (so-called laminate type resin case).

The case body 16 is, for example, a bottomed cylindrical metal container. A gasket 28 is provided between the case body 16 and the sealing assembly 17 to secure a sealing property of the inside of the battery. The case body 16 has, for example, a projecting portion 22 in which a part of a side part thereof projects inside for supporting the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member constituting the sealing assembly 17 has, for example, a disk shape or a ring shape, and the respective members except for the insulating member 25 are electrically connected to each other. The lower vent member 24 and the upper vent member 26 are connected to each other at the respective central parts thereof, and the insulating member 25 is interposed between the respective circumferential parts of the vent members 24 and 26. When the internal pressure of the non-aqueous electrolyte secondary battery 10 is increased by heat generation due to an internal short circuit or the like, for example, the lower vent member 24 is deformed so as to push the upper vent member 26 up toward the cap 27 side and is broken, and thus, a current pathway between the lower vent member 24 and the upper vent member 26 is cut off. When the internal pressure is further increased, the upper vent member 26 is broken, and gas is discharged through an opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to a lower surface of the filter 23 that is a bottom plate of the sealing assembly 17 by welding or the like, and the cap 27 that is a top plate of the sealing assembly 17 electrically connected to the filter 23 becomes a positive electrode terminal. The negative electrode lead 21 is connected to a bottom inner surface of the case body 16 by welding or the like, and the case body 16 becomes a negative electrode terminal.

### [Positive Electrode]

The positive electrode 11 includes a positive electrode current collector and a positive electrode mixture layer disposed on the positive electrode current collector. Note that the positive electrode mixture layer is desirably disposed on both surfaces of the positive electrode current collector.

As the positive electrode current collector, a foil of a metal stable in a potential range of the positive electrode, such as aluminum or an aluminum alloy, a film in which the metal is disposed on a surface layer, or the like can be used. The positive electrode current collector has a thickness of, for example, about greater than or equal to 10 µm and less than or equal to 100 µm.

The positive electrode mixture layer includes a positive electrode active material and a dielectric. It is preferable that the positive electrode mixture layer includes a binder from the viewpoint of binding the positive electrode active materials to each other to secure the mechanical strength of the positive electrode mixture layer. In addition, it is preferable that the positive electrode mixture layer includes a conductive agent from the viewpoint of improving the conductivity of the layer.

The positive electrode 11 is manufactured, for example, as follows. First, a positive electrode active material, a dielectric, a binder, a conductive agent, and the like are mixed, and the mixture is dispersed in a solvent to prepare a positive electrode mixture slurry. Then, the positive electrode mixture slurry is applied onto the positive electrode current collector, a coating film is dried, and then the coating film is rolled, such that the positive electrode 11 can be manufactured.

A ratio (D50 of the dielectric/D50 of the positive electrode active material) of a volume-based median diameter (D50) of the dielectric to a volume-based median diameter (D50) of the positive electrode active material is greater than or equal to 0.15 and less than or equal to 0.6 and preferably greater than or equal to 0.26 and less than or equal to 0.45. As described above, when the dielectric and the positive electrode active material are mixed in manufacturing the positive electrode, the dielectrics may be unevenly distributed. Since the dielectric itself has an insulating property, when the dielectrics are unevenly distributed in the positive electrode mixture layer, the charge transfer resistance of the battery may increase. However, when D50 of the dielectric/D50 of the positive electrode active material is within the above range, it is presumed that uneven distribution of the dielectrics is suppressed and the dielectrics are dispersed in the positive electrode mixture layer on average to some extent as compared with the case outside the above range. As a result, for example, it is considered that lithium ions in the non-aqueous electrolyte are attracted to the vicinity of the positive electrode active material by dielectric polarization of the dielectric, occlusion and release of the lithium ions in the positive electrode active material are promoted, and the charge transfer resistance of the battery is reduced.

In the present disclosure, the volume-based median diameter (D50) means a particle diameter at which a cumulative frequency is 50% from a smaller particle diameter side in a particle size distribution on a volumetric basis, and is also called a median diameter. The particle diameter and particle size distribution of the positive electrode active material or the dielectric can be measured by a laser diffraction type particle size distribution measuring device (for example, MT3000II, manufactured by MicrotracBEL Corp.).

The volume-based median diameter (D50) of the positive electrode active material is preferably greater than or equal to 5 µm and less than or equal to 20 µm and more preferably greater than or equal to 8 µm and less than or equal to 18 µm from the viewpoint of further reducing the charge transfer resistance of the battery.

The positive electrode active material is not particularly limited as long as it is a lithium composite oxide capable of reversibly inserting and removing lithium, but for example, it is preferable to include a lithium composite oxide represented by the following General Formula (1) from the viewpoint of an increase in capacity of the battery, excellent charge and discharge cycle characteristics, and the like.

LiₐNi_{b}Co_{(1-b-c)}Al_{c}W_{d}Oₑ (1)

In the formula, 0.9 < a ≤ 1.2, 0.88 ≤ b ≤ 0.96, 0.04 ≤ c ≤ 0.12, and 1.9 ≤ e ≤ 2.1, and when W/(Ni + Co + Al + W) = d, it is preferable that 0.0003 ≤ d ≤ 0.002. The composition of the lithium composite oxide can be measured by inductively coupled plasma (ICP) emission spectrometry.

The dielectric is a substance that is excellent in dielectric properties than conductivity and can be said to be an insulator against a DC voltage. Examples of the dielectric include a composite oxide having any one of crystal structures of XYO₃ type, X₂Y₂O₇ type, and XX'₃Y₄O₁₂ type. X is one or two or more elements of an alkali metal element (for example, elements in Group 1 such as Na, K, Rb, and Cs), an alkaline earth metal element (for example, elements in Group 2 such as Ca, Sr, and Ba), a rare earth metal element (for example, La, Ce, Nd, Sm, Gd, Yb, and the like), Cu, Pb, and Bi. X' is, for example, one or two or more elements of transition metal elements, and is an element different from X. Y is one or two or more elements of transition metal elements and Sn. The transition metal element is, for example, an element belonging to Groups 3 to 11 of IUPAC classification. Examples thereof include elements in Group 4 (for example, Ti, Zr, Hf, and the like), elements in Group 5 (for example, V, Nb, Ta, and the like), elements in Group 6 (Cr, Mo, W, and the like), elements in Group 7 (Mn, Tc, and the like), elements in Group 8 (Fe, Ru, Os, and the like), elements in Group 9 (Co, Rh, Ir, and the like), elements in Group 10 (Ni, Pd, Pt, and the like), elements in Group 11 (Cu, Ag, Au, and the like), and rare earth metal elements (La, Ce, Sm, and the like). In addition, Y preferably includes an element different from X, and more preferably consists of an element different from X. Examples of particularly preferred dielectric include BaTiO₃. Note that the crystal structure of the dielectric can be confirmed by XRD measurement using a CuKα ray.

A relative permittivity of the dielectric is preferably greater than or equal to 8 and less than or equal to 500 and more preferably greater than or equal to 50 and less than or equal to 500. In addition, a volume resistivity at 20°C is preferably greater than or equal to 1 × 10⁵ Ω·m, more preferably greater than or equal to 1 × 10⁶ Ω·m, and still more preferably greater than or equal to 1 × 10¹⁰ Ω·m.

A content of the dielectric is, for example, preferably less than or equal to 2% by mass, and preferably less than or equal to 1% by mass, with respect to the mass of the positive electrode active material. When the content of the dielectric is greater than 2% by mass with respect to the mass of the positive electrode active material, the capacity of the battery may be reduced as compared with the case of less than or equal to 2% by mass. A lower limit value of the content of the dielectric is not particularly limited, and may be, for example, greater than or equal to 0.1% by mass with respect to the mass of the positive electrode active material from the viewpoint of effectively reducing the charge transfer resistance of the battery.

Examples of the conductive agent contained in the positive electrode mixture layer include carbon materials such as carbon black, acetylene black, Ketjenblack, and graphite. These conductive agents may be used alone or in combination of two or more thereof. A content of the conductive agent in the positive electrode mixture layer is, for example, preferably greater than or equal to 0.5% by mass and less than or equal to 4% by mass, and more preferably greater than or equal to 0.5% by mass and less than or equal to 1.5% by mass.

Examples of the binder contained in the positive electrode mixture layer include a fluororesin such as polytetrafluoroethylene (PTFE) or polyvinylidene fluoride (PVdF), polyacrylonitrile (PAN), a polyimide-based resin, an acrylic resin, a polyolefin-based resin, styrene-butadiene rubber (SBR), carboxymethyl cellulose (CMC) or a salt thereof, polyacrylic acid (PAA) or a salt thereof (PAA-Na, PAA-K, and the like, or a partially neutralized salt may be used), polyethylene oxide (PEO), and polyvinyl alcohol (PVA). These conductive agents may be used alone or in combination of two or more thereof. A content of the binder in the positive electrode mixture layer is, for example, preferably greater than or equal to 0.5% by mass and less than or equal to 4% by mass, and more preferably greater than or equal to 0.5% by mass and less than or equal to 1.5% by mass.

### [Negative Electrode]

The negative electrode 12 includes, for example, a negative electrode current collector and a negative electrode mixture layer formed on the current collector. As the negative electrode current collector, a foil of a metal stable in a potential range of the negative electrode, such as copper, a film in which the metal is disposed on a surface layer, or the like can be used. The negative electrode mixture layer includes, for example, a negative electrode active material, a binder, and the like. The negative electrode 12 can be manufactured, for example, as follows. First, a negative electrode active material, a binder, and the like are mixed, and the mixture is dispersed in a solvent to prepare a negative electrode mixture slurry. The negative electrode mixture slurry is applied onto the negative electrode current collector, a coating film is dried, and then the coating film is rolled, such that the negative electrode 12 can be manufactured.

The negative electrode active material is not particularly limited as long as it is a material capable of occluding and releasing lithium ions, and examples thereof include a lithium alloy such as metal lithium, a lithium-aluminum alloy, a lithium-lead alloy, a lithium-silicon alloy, or a lithium-tin alloy, a carbon material such as graphite, coke, or an organic substance baked body, and a metal oxide such as SnO₂, SnO, or TiO₂. These materials may be used alone or in combination of two or more thereof.

Examples of the binder contained in the negative electrode mixture layer include a fluorine-based resin, PAN, a polyimide-based resin, an acrylic resin, a polyolefin-based resin, SBR, CMC or a salt thereof, PAA or a salt thereof, PEO, and PVA as in the case of the positive electrode. Note that the negative electrode mixture layer may include a conductive agent as in the case of the positive electrode.

### [Separator]

For example, a porous sheet having an ion permeation property and an insulation property is used for the separator 13. Specific examples of the porous sheet include a fine porous thin film, a woven fabric, and a non-woven fabric. The separator 13 is formed of, for example, a polyolefin such as polyethylene or polypropylene, or cellulose. The separator 13 may be a laminate including a cellulose fiber layer and a thermoplastic resin fiber layer formed of a polyolefin or the like. In addition, the separator 13 may be a multi-layer separator including a polyethylene layer and a polypropylene layer, and may have a surface layer formed of an aramid resin or a surface layer including an inorganic filler.

### [Non-Aqueous Electrolyte]

The non-aqueous electrolyte contains a non-aqueous solvent and an electrolyte salt. As the non-aqueous solvent, for example, esters, ethers, nitriles such as acetonitrile, amides such as dimethylformamide, a mixed solvent of two or more thereof, and the like can be used. The non-aqueous solvent may contain a halogen-substituted product in which at least some hydrogens in these solvents are substituted with halogen atoms such as fluorine.

Examples of the esters include cyclic carbonates such as ethylene carbonate (EC), propylene carbonate (PC), and butylene carbonate, chain carbonic acid esters such as dimethyl carbonate (DMC), methyl ethyl carbonate (MEC), diethyl carbonate (DEC), methyl propyl carbonate, ethyl propyl carbonate, and methyl isopropyl carbonate, cyclic carboxylic acid esters such as γ-butyrolactone and γ-valerolactone, and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the nitriles include acetonitrile, propionitrile, butyronitrile, valeronitrile, n-heptanonitrile, succinonitrile, glutaronitrile, adiponitrile, pimelonitrile, 1,2,3-propane tricarbonitrile, and 1,3,5-pentane tricarbonitrile.

Examples of the halogen-substituted product include fluorinated cyclic carbonic acid ester such as fluoroethylene carbonate (FEC), fluorinated chain carbonic acid ester, and fluorinated chain carboxylic acid ester such as methyl fluoropropionate (FMP).

Examples of the electrolyte salt include borates such as LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, n is 1 or 2), LiB₁₀Cl₁₀, LiCl, LiBr, LiI, lithium chloroborane, lithium lower aliphatic carboxylate, Li₂B₄O₇, and Li(B(C₂O₄)F₂), and imide salts such as LiN(SO₂CF₃)₂ and LiN(CₗF₂ₗ₊₁SO₂)(CₘF₂ₘ₊₁SO₂) {l and m are integers greater than or equal to 1}. These electrolyte salts may be used alone or in combination of a plurality of kinds thereof. A concentration of the electrolyte salt is, for example, greater than or equal to 0.8 mol and less than or equal to 1.8 mol per 1 L of the non-aqueous solvent.

### EXAMPLES

Hereinafter, the present disclosure will be further described with reference to Examples, but the present disclosure is not limited to these Examples.

### <Example 1>

### [Preparation of Positive Electrode Active Material]

Particles of a lithium composite oxide A having a layered structure represented by LiNi_{0.91}Co_{0.04}Al_{0.05}O₂ and tungsten oxide (WO₃) were mixed at a predetermined ratio, and then heat-treated to obtain a lithium composite oxide B containing a tungsten compound. The lithium composite oxide B was used as a positive electrode active material. The volume-based median diameter (D50) of the positive electrode active material was 12.0 µm. Note that the amount of the tungsten compound added was 0.08 atom% in terms of tungsten element with respect to the total molar amount of metal elements excluding lithium in the lithium composite oxide A.

### [Manufacture of Positive Electrode]

100 parts by mass of a positive electrode active material, 1 part by mass of acetylene black as a conductive agent, 1 part by mass of polyvinylidene fluoride as a binder, and 0.3 parts by mass of barium titanate (BaTiO₃) having a volume-based median diameter (D50) of 3.8 µm were mixed, and then an appropriate amount of N-methyl-2 pyrrolidone (NMP) was added, thereby preparing a positive electrode mixture slurry. The slurry was applied onto both surfaces of a positive electrode current collector formed of an aluminum foil, the coating film was dried, and then the coating film was rolled by a rolling roller, thereby manufacturing a positive electrode in which a positive electrode mixture layer was formed on both surfaces of a positive electrode current collector.

### [Manufacture of Negative Electrode]

95 parts by mass of a negative electrode active material formed of graphite powder and silicon oxide, 3 parts by mass of carboxymethyl cellulose (CMC), 2 parts by mass of styrene-butadiene rubber (SBR), and an appropriate amount of water were mixed, thereby preparing a negative electrode mixture slurry. The slurry was applied onto both surfaces of a negative electrode current collector formed of a copper foil, the coating film was dried, and then the coating film was rolled by a rolling roller, thereby manufacturing a negative electrode in which a negative electrode mixture layer was formed on both surfaces of a negative electrode current collector.

### [Preparation of Non-Aqueous Electrolyte]

LiPF₆ was dissolved at a concentration of 1.0 mol/L in a mixed non-aqueous solvent of ethylene carbonate (EC) and methyl ethyl carbonate (MEC) to obtain a non-aqueous electrolyte.

### [Manufacture of Non-Aqueous Electrolyte Secondary Battery]

A positive electrode lead was attached to the manufactured positive electrode, and a negative electrode lead was attached to the manufactured negative electrode. A polyethylene microporous film as a separator was disposed between both electrodes and wound in a spiral shape to produce a wound electrode assembly. The electrode assembly and the non-aqueous electrolyte were disposed in an exterior body of an aluminum laminate, and then a peripheral edge of the exterior body was heated and welded to obtain a non-aqueous electrolyte secondary battery.

### <Example 2>

A non-aqueous electrolyte secondary battery was manufactured in the same manner as that of Example 1, except that the amount of barium titanate (BaTiO₃) was set to 0.5 parts by mass.

### <Example 3>

A non-aqueous electrolyte secondary battery was manufactured in the same manner as that of Example 1, except that barium titanate (BaTiO₃) having a volume-based median diameter (D50) of 5.4 µm was used.

### <Example 4>

A non-aqueous electrolyte secondary battery was manufactured in the same manner as that of Example 1, except that barium titanate (BaTiO₃) having a volume-based median diameter (D50) of 3.1 µm was used.

### <Example 5>

A non-aqueous electrolyte secondary battery was manufactured in the same manner as that of Example 1, except that barium titanate (BaTiO₃) having a volume-based median diameter (D50) of 2.2 µm was used.

### <Comparative Example 1>

A non-aqueous electrolyte secondary battery was manufactured in the same manner as that of Example 1, except that barium titanate (BaTiO₃) was not added.

### <Comparative Example 2>

A non-aqueous electrolyte secondary battery was manufactured in the same manner as that of Example 1, except that barium titanate (BaTiO₃) having a volume-based median diameter (D50) of 10.0 µm was used.

### <Comparative Example 3>

A non-aqueous electrolyte secondary battery was manufactured in the same manner as that of Example 1, except that barium titanate (BaTiO₃) having a volume-based median diameter (D50) of 1.2 µm was used.

### [Measurement of Charge Transfer Resistance]

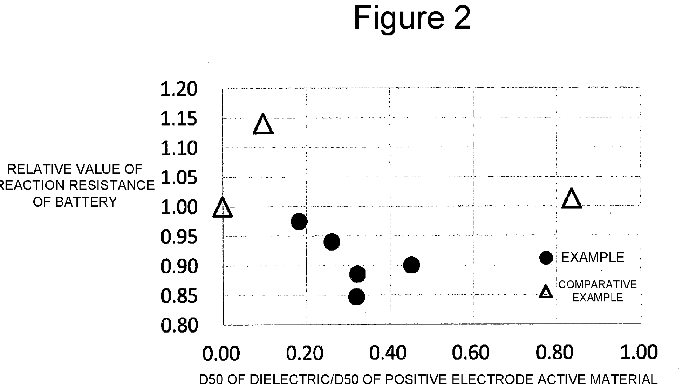

Each of the non-aqueous secondary batteries of Examples and Comparative Examples was subjected to constant current charge at a constant current of 0.2 C until a battery voltage reached 4.2 V under a temperature environment at 25°C. For these non-aqueous electrolyte secondary batteries, alternating current impedance measurement was performed in a range of 0.1 Hz to 1 kHz to create a Cole-Cole plot. The charge transfer resistance of the battery was determined from a diameter of a substantially semicircle appearing in the obtained Cole-Cole plot. The charge transfer resistance of the battery of Comparative Example 1 was set as 1, and the charge transfer resistance of each of the batteries of Examples and other Comparative Examples was calculated as a relative value (INDEX). The results are shown in Table 1 and FIG. 2.

**[Table 1]**

| | Dielectric BaTiO₃ | | Dielectric D50/positive electrode active material D50 | Charge transfer resistance of battery (Relative value) |
|---|---|---|---|---|
| | D50 µm | Content | | |
| Example 1 | 3.8 | 0.3 wt% | 0.32 | 0.88 |
| Example 2 | 3.8 | 0.5 wt% | 0.32 | 0.85 |
| Example 3 | 5.4 | 0.3 wt% | 0.45 | 0.90 |
| Example 4 | 3.1 | 0.3 wt% | 0.26 | 0.94 |
| Example 5 | 2.2 | 0.3 wt% | 0.18 | 0.97 |
| Comparative Example 1 | - | - | - | 1.00 |
| Comparative Example 2 | 10.0 | 0.3 wt% | 0.83 | 1.01 |
| Comparative Example 3 | 1.2 | 0.3 wt% | 0.10 | 1.14 |

As in Examples 1 to 5, when the ratio (D50 of the dielectric/D50 of the positive electrode active material) of the volume-based median diameter (D50) of the dielectric to the volume-based median diameter (D50) of the positive electrode active material was in the range of greater than or equal to 0.15 and less than or equal to 0.6, the charge transfer resistance of the battery was suppressed to be lower than that in Comparative Example 1. On the other hand, as in Comparative Examples 2 and 3, when the ratio (D50 of the dielectric/D50 of the positive electrode active material) of the volume-based median diameter (D50) of the dielectric to the volume-based median diameter (D50) of the positive electrode active material was in the range of greater than or equal to 0.15 and less than or equal to 0.6, the charge transfer resistance of the battery was suppressed to be higher than that in Comparative Example 1.

### REFERENCE SIGNS LIST

- 10: Non-aqueous electrolyte secondary battery
- 11: Positive electrode
- 12: Negative electrode
- 13: Separator
- 14: Electrode assembly
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A non-aqueous electrolyte secondary battery comprising a positive electrode, a negative electrode, and a non-aqueous electrolyte,
wherein the positive electrode includes a positive electrode current collector and a positive electrode mixture layer provided on the positive electrode current collector,
the positive electrode mixture layer includes a positive electrode active material and a dielectric, and
a ratio (D50 of the dielectric/D50 of the positive electrode active material) of a volume-based median diameter (D50) of the dielectric to a volume-based median diameter (D50) of the positive electrode active material is greater than or equal to 0.15 and less than or equal to 0.6.

2. The non-aqueous electrolyte secondary battery according to claim 1, wherein a content of the dielectric is less than or equal to 2% by mass with respect to a mass of the positive electrode active material.

3. The non-aqueous electrolyte secondary battery according to claim 1 or 2, wherein the ratio (D50 of the dielectric/D50 of the positive electrode active material) of the volume-based median diameter (D50) of the dielectric to the volume-based median diameter (D50) of the positive electrode active material is greater than or equal to 0.26 and less than or equal to 0.45.

4. The non-aqueous electrolyte secondary battery according to claim 2, wherein the content of the dielectric is less than or equal to 1% by mass with respect to the mass of the positive electrode active material.

5. The non-aqueous electrolyte secondary battery according to any one of claims 1 to 4, wherein the dielectric includes BaTiO₃.

6. The non-aqueous electrolyte secondary battery according to any one of claims 1 to 5, wherein the volume-based median diameter (D50) of the positive electrode active material is greater than or equal to 5 µm and less than or equal to 20 µm.

7. The non-aqueous electrolyte secondary battery according to any one of claims 1 to 6, wherein the positive electrode active material includes a lithium composite oxide represented by General Formula LiₐNi_{b}Co_{(1-b-c})Al_{c}W_{d}Oₑ (in the formula, 0.9 < a ≤ 1.2, 0.88 ≤ b ≤ 0.96, 0.04 ≤ c ≤ 0.12, and 1.9 ≤ e ≤ 2.1, and when W/(Ni + Co + Al + W) = d, 0.0003 ≤ d <_ 0.002).
